# EUROPEAN PATENT SPECIFICATION

(11) **EP 3 567 935 B1**
(45) Date of publication and mention of the grant of the patent: **01.02.2023**
(21) Application number: 18736393.2
(22) Date of filing: 03.01.2018
(51) Int. Cl.: H04W 48/18, H04W 8/18, H04W 48/14, H04W 48/16, H04W 72/04

(54) **SERVICE REQUEST PROCESSING METHOD AND APPARATUS**
VERFAHREN UND VORRICHTUNG ZUR DIENSTANFRAGEVERARBEITUNG
PROCÉDÉ ET APPAREIL DE TRAITEMENT DE DEMANDE DE SERVICE

(30) Priority: 06.01.2017 CN 201710009902
(43) Date of publication of application: 13.11.2019
(73) Proprietor: China Mobile Communication Ltd., Research Institute, Beijing 100053 (CN); China Mobile Communications Group Co., Ltd, Beijing 100032 (CN)
(72) Inventor: SUN, Junshuai, Beijing 100032 (CN); KIMBA DIT ADAMOU, Boubacar, Beijing 100032 (CN)
(74) Representative: Gunzelmann, Rainer
(86) International application number: PCT/CN2018/070083
(87) International publication number: WO 2018/127046

(56) References cited:
- WO-A1-2016/192636
- CN-A- 106 060 900
- ANONYMOUS: "3rd Generation Partnership Project; Technical Specification Group Services and System Aspects; Study on Architecture for Next Generation System (Release 14)", 3GPP STANDARD ; TECHNICAL REPORT ; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-527, XP051295448,
- SAMSUNG: "Update on solution 1.2: Extending the Slice Type components of an MDD vector", 3GPP DRAFT; S2-166665 UPDATE ON SOLUTION 1.2 - EXTENDING THE SLICE TYPE COMPONENTS OF AN MDD VECTOR, 3RD GENERATION PARTNERSHIP PROJECT (3GPP), MOBILE COMPETENCE CENTRE ; 650, ROUTE DES LUCIOLES ; F-0 , vol. SA WG2, no. Reno, Nevada (US); 20161114 - 20161118 14 November 2016 (2016-11-14), XP051185222, Retrieved from the Internet: URL:http://www.3gpp.org/ftp/Meetings_3GPP_ SYNC/SA2/Docs/ [retrieved on 2016-11-14]
- INTERDIGITAL ET AL: "Modification of the Set of Selected Slices for a UE", 3GPP DRAFT; S2-164540, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya, China; 20160829 - 20160902 27 August 2016 (2016-08-27), XP051141612, Retrieved from the Internet: URL:http://www.3gpp.org/ftp/Meetings_3GPP_ SYNC/SA2/Docs/ [retrieved on 2016-08-27]
- "3rd Generation Partnership Project; Technical Specification Group Services and System Aspects; Study on the security aspects of the next generation system (Release 14)", 3GPP STANDARD; 3GPP TR 33.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.6.0, 25 November 2016 (2016-11-25), pages 1-375, XP051229844,
- HUAWEI ET AL.: 'Update of Solution #1 for Key issue #1, S 2-161503' 3GPP SA WG2 MEETING #114 15 April 2016, XP051086496
- CHINA MOBILE: 'Discussion and Interim agreement update about network slicing, S 2-166422' 3GPP SA WG 2 MEETING #118 18 November 2016, XP051199405

## Description

### TECHNICAL FIELD

The present disclosure relates to the field of communication technology, and in particular, relates to a method and a device for processing a service request.

### BACKGROUND

A core network slicing is to slice a physical network into multiple virtual end-to-end networks, wherein the virtual networks are logically independent from each other, i.e., fault in any one of the virtual networks may not have an impact on other virtual networks, and each of the virtual networks has respective functional feature and is oriented to a respective demand and service. Aimed at providing on-demand networks by the core network slicing, the core network slicing may provide a wide variety of connectivity services for various customers, wherein the connectivity services are defined by many customized software functions which encompass a geographic coverage, a time duration, a capacity, a speed, a delay, reliability, safety, availability, etc. A base station has a fixed function in that the function of the base station is set daily in accordance with a maximum set of network functions. In a Fifth Generation (5G), a "user-centered" network architecture requires a network capable of configuring the network functions on demands of users. However, customized demands of the user are not supported in the related art, leading to a problem that selection of core network slices may not be performed in a flexible manner.

3GPP TR 23.799 V0.6.0 (2016-12) (Technical Specification Group Services and System Aspects; Study on Architecture for Next Generation System (Release 14)) discloses that an UE sends an Attach Request including an MDD and acquires information about a PDU session.

### SUMMARY

The objective of the present disclosure is to provide a method and a device for identifying a traffic service, so as to solve the problem in the related art that the selection of a core network slice may not be performed in a flexible manner. The invention is set out in the appended set of claims.

To achieve the above objective, solutions are provided according to the independent claims. Additional advantageous embodiments are provided in the dependent claims.

### BRIEF DESCRIPTION OF THE DRAWINGS

Fig.1 is a schematic diagram of a network structure according to embodiments of the present disclosure;
Fig.2 is a schematic flow chart of a method for processing a service request provided by the embodiments of the present disclosure;
Fig.3 is another schematic flow chart of the method for processing the service request provided by the embodiments of the present disclosure;
Fig.4 is yet another schematic flow chart of the method for processing the service request provided by the embodiments of the present disclosure;
Fig.5 is still yet another schematic flow chart of the method for processing the service request provided by the embodiments of the present disclosure;
Fig.6 is a schematic structural diagram of a device for processing a service request provided by the embodiments of the present disclosure;
Fig.7 is another schematic structural diagram of the device for processing the service request provided by the embodiments of the present disclosure;
Fig.8 is yet another schematic structural diagram of the device for processing the service request provided by the embodiments of the present disclosure;
Fig.9 is a schematic structural diagram of a device for processing a service request provided by the embodiments of the present disclosure;
Fig. 10 is another schematic structural diagram of the device for processing the service request provided by the embodiments of the present disclosure;
Fig. 11 is yet another schematic structural diagram of the device for processing the service request provided by the embodiments of the present disclosure;
Fig. 12 is still yet another schematic structural diagram of the device for processing the service request provided by the embodiments of the present disclosure;
Fig. 13 is a schematic structural diagram of a device for processing a service request provided by the embodiments of the present disclosure;
Fig. 14 is another schematic structural diagram of the device for processing the service request provided by the embodiments of the present disclosure;
Fig. 15 is a schematic structural diagram of a device for processing a service request provided by the embodiments of the present disclosure;
Fig. 16 is another schematic structural diagram of the device for processing the service request provided by the embodiments of the present disclosure;
Fig. 17 is yet another schematic structural diagram of the device for processing the service request provided by the embodiments of the present disclosure.

### DETAILED DESCRIPTION

In order to make the technical problem to be solved, the technical solutions and advantages of the present disclosure clearer, specific embodiments will be described in detail below with reference to the drawings.

Directed to a problem in the related art that customized demands of users may not supported and selection of core network slices may not be performed in a flexible manner, embodiments of the present disclosure provide a method and a device for processing a service request. In the embodiments of the present disclosure, when a terminal initiates a service request, the terminal selects, from a set of core network slices obtained in advance, a first core network slice supporting the service request, wherein the set of core network slices includes a plurality of core network slices and each of the core network slices includes a core network capability parameter and/or a core network function module; and the terminal transmits slice configuration information of the first core network slice and a message of a service request to a network side, thereby enabling the selection of a core network slice to be performed in a flexible manner.

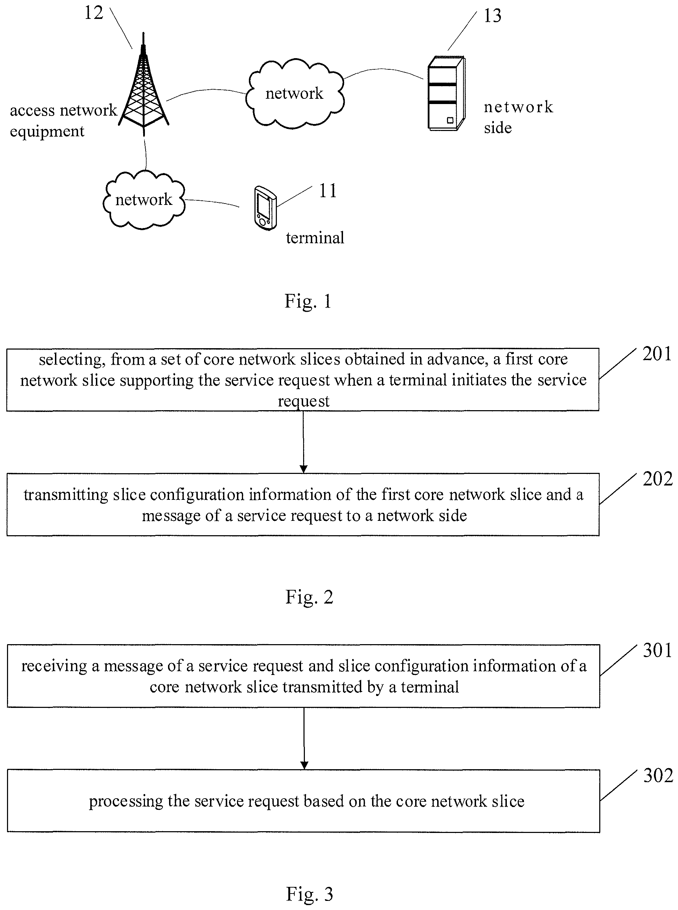

Referring to Fig. 1, Fig.1 is a schematic diagram of a network structure according to embodiments of the present disclosure. As shown in Fig. 1, the network structure includes a terminal 11 and an access network equipment 12; the terminal 11 may be a terminal device capable of connecting to a network, such as a handset, a tablet, a personal computer, a laptop, a wearable device, and the like. It is noted that, a specific form of the terminal 11 is not limited in the embodiments of the present disclosure. The terminal 11 may establish a communication connection with the access network equipment 12. Further, the access network equipment 12 may be a base station in this communication system, e.g., an evolved Node B (eNB), or may be a Radio Network Controller (RNC) in a UMTS (Universal Mobile Telecommunications System) Terrestrial Radio Access Network (UTRAN) system. It is noted that, a specific form of the access network equipment 12 is not limited in the embodiments of the present disclosure. The access network equipment 12 may be in communication with the network side so that the selection of a core network slice may be performed and a service request may be performed through the selected core network slice.

In view of the problem in the related art that the selection of a core network slice may not be performed in a flexible manner, the present disclosure provide a method and a device for processing a service request. In the embodiments of the present disclosure, when the terminal initiates the service request, the terminal selects, from the set of core network slices obtained in advance, the first core network slice supporting the service request, wherein the set of core network slices includes the plurality of core network slices and each of the core network slices includes the core network capability parameter and/or the core network function module; and the terminal transmits slice configuration information of the first core network slice and a message of a service request to the network side, thereby enabling the selection of a core network slice to be performed in a flexible manner.

Referring to Fig.2, Fig. 2 is a schematic flow chart of a method for processing a service request provided by the embodiments of the present disclosure. As shown in Fig.2, the method includes the following steps 201-202.

Step 201: selecting, from a set of core network slices obtained in advance, a first core network slice supporting the service request when a terminal initiates the service request, wherein the set of core network slices includes a plurality of core network slices and each of the core network slices includes a core network capability parameter and/or a core network function module.

In this step, a case that the terminal initiates the service request may be a case that the terminal initiates the service request when the terminal accesses a network for a first time. The service request includes service indication information, e.g., digital information, signaling, etc. Based on the service indication information, a core network slice matching the service request may be selected from a set of core network slices obtained in advance. During the selection, a correspondence may firstly be established between service indication information and the set of core network slices, and then the service indication information is identified so as to determine the core network slice supporting the service request. The set of core network slices obtained in advance may be selected by the network side based on subscription information of the terminal and a capability parameter of the terminal, wherein the capability parameter of the terminal may be a traffic type such as an Enhanced Mobile Broadband (EMBB) and/or different identifiers of Mobility Management Entities (MMEs). Each of the core network slices includes a core network capability parameter and/or a core network function module, such as different network characteristic functional capabilities, different network modules.

Step 202: transmitting slice configuration information of the first core network slice and a message of a service request to a network side.

In this step, in a case that the terminal is to initiate a service, the terminal transmits the slice configuration information of the selected first core network slice to the network side, wherein the network side may be a core network or a base station. After the network side receives the first core network slice, the network side determines whether the first core network slice is activated or not. If the first core network slice is not activated, the network side activates the first core network slice and processes the service request by means of the first core network slice. The slice configuration information may be a slice identifier and the core network capability parameter and/or the core network function module supported by the slice. In this way, the network side selects the first core network slice in accordance with the slice configuration information of the first core network slice so as to process the service request by means of the first core network slice, that is, the service request is transmitted through the first core network slice.

Prior to the selecting, from the set of core network slices obtained in advance, the first core network slice supporting the service request when the terminal initiates the service request, the method further includes: receiving information of the set of core network slices transmitted by the network side, wherein the set of core network slices is a set of core network slices selected in accordance with subscription information of the terminal and a capability parameter of the terminal.

In this embodiment, when the terminal accesses the network, the network side selects a set of core network slices including all core network slices matching the subscription information and the capability parameter of the terminal, and transmits information of the set of core network slices to the terminal so that the terminal may select a core network slice corresponding to the service request from the set of core network slices and initiate the service request when the terminal initiates the service request. In this way, the core network slice suitable for data transmission may be selected in a flexible manner, and certain core network slice resources may be requested from the network side actively.

After the transmitting the message of the service request to the network side, the method further includes receiving an acknowledgement message transmitted by the network side after a slice configuration procedure is completed based on the slice configuration information by the network side.

In this embodiment, after the network side receives the slice configuration information, the network side configures the core network slice based on the slice configuration information. The slice configuration procedure includes activating the core network slice and performing other wireless configurations. Further, the network side transmits, to the terminal, the acknowledgement message indicating completion of the slice configuration procedure, and the terminal may obtain a situation at the network side based on the acknowledgement message.

The slice configuration information includes one or more of: a slice identifier of the slice and the core network capability parameter and/or the core network function module supported by the core network slice.

In this embodiment, the slice identifier may be a slice name of the slice, service types supported by the slice, or the like; the core network capability parameter supported by the core network slice may be a transmission rate, a transmission capacity of the core network, or the like; and the core network function module is, for example, an EMBB capability, a MME capability, etc.

In the embodiment of the present disclosure, when the terminal initiates the service request, the terminal selects, from a set of core network slices obtained in advance, the first core network slice supporting the service request, wherein the set of core network slices includes a plurality of core network slices and each of the core network slices includes the core network capability parameter and/or the core network function module; and the terminal transmits slice configuration information of the first core network slice and a message of a service request to the network side, thereby enabling the selection of a core network slice to be performed in a flexible manner.

Referring to Fig.3, Fig.3 is another schematic flow chart of the method for processing the service request provided by the embodiments of the present disclosure. As shown in Fig.3, the method includes the following steps 301-302.

Step 301: receiving a message of a service request and slice configuration information of a core network slice transmitted by a terminal, wherein the core network slice includes a core network capability parameter and/or a core network function module.

In this step, in a case that the terminal is to initiate a service, the terminal transmits the slice configuration information of the selected first core network slice to the network side, the network side may be the core network or a base station. After the network side is informed of the first core network slice, the network side determines whether the first core network slice is activated or not. If the first core network slice is not activated, the network side activates the first core network slice and processes the service request by means of the first core network slice. In this way, the network side selects the first core network slice in accordance with the slice configuration information of the first core network slice so as to process the service request by means of the first core network slice, that is, the service request is transmitted through the first core network slice.

Step 302: processing the service request by means of the core network slice.

In this step, the service request is transmitted through the core network slice, or the service request is loaded onto the core network slice. In this way, the service request transmitted by the terminal may be processed in a flexible manner, thus improving an effect of processing the service request.

Optionally, prior to the processing the service request by means of the core network slice, the method further includes determining whether the core network slice is activated or not; if the core network slice is not activated, activating the core network slice and proceeding to the processing the service request by means of the core network slice after the core network slice is activated; if the core network slice is activated, proceeding directly to processing the service request by means of the core network slice.

In this embodiment, when determining the core network slice for processing the service request, a status of the core network slice is determined, and only if the core network slice is activated, the core network slice may be used to process the service request, thereby improving an accuracy of processing the service request and preventing a faulty operation effectively.

Prior to the receiving the message of the service request and the slice configuration information of the core network slice transmitted by the terminal, the method further includes transmitting information of a set of core network slices to the terminal, wherein the set of core network slices is a set of core network slices selected in accordance with subscription information and a capability parameter of the terminal.

In this embodiment, when the terminal accesses the network, the network side selects a set of core network slices including all core network slices matching the subscription information and the capability parameter of the terminal, and transmits information of the set of core network slices to the terminal so that the terminal may select a core network slice corresponding to the service request from the set of core network slices to initiate the service request when the terminal initiates the service request. In this way, the core network slice for data transmission may be selected in a flexible manner, and certain core network slice resources may be requested from the network side actively.

After the processing the service request by means of the core network slice, the method further includes performing a slice configuration procedure based on the slice configuration information, and transmitting an acknowledgement message to the terminal after the slice configuration procedure is completed.

In this embodiment, after the network side receives the slice configuration information, the network side configures the core network slice based on the slice configuration information. The slice configuration procedure includes activating the core network slice and performing other wireless configurations. Further, the network side transmits the acknowledgement message indicating the completion of the slice configuration procedure to the terminal, so that the terminal may be informed of a situation at the network side based on the acknowledgement message.

The slice configuration information includes one or more of: a slice identifier and a core network capability parameter and/or a core network function module supported by the core network slice.

In this embodiment, the slice identifier may be the slice name of the core network slice, the service types supported by the core network slice, or the like; the core network capability parameter supported by the core network slice may be the transmission rate, the transmission capacity of the core network, or the like; and the core network function module is, for example, the EMBB capability, the MME capability, etc.

In the embodiments of the present disclosure, the message of the service request and the slice configuration information of the core network slice transmitted by the terminal are received, wherein the core network slice includes a core network capability parameter and/or a core network function module; and the service request is processed based on the core network slice. In this way, the network side selects the core network slice based on the slice configuration information transmitted by the terminal in a flexible manner, and processes the service request by using the core network slice, thereby enabling the selection of the core network slice to be performed in a flexible manner.

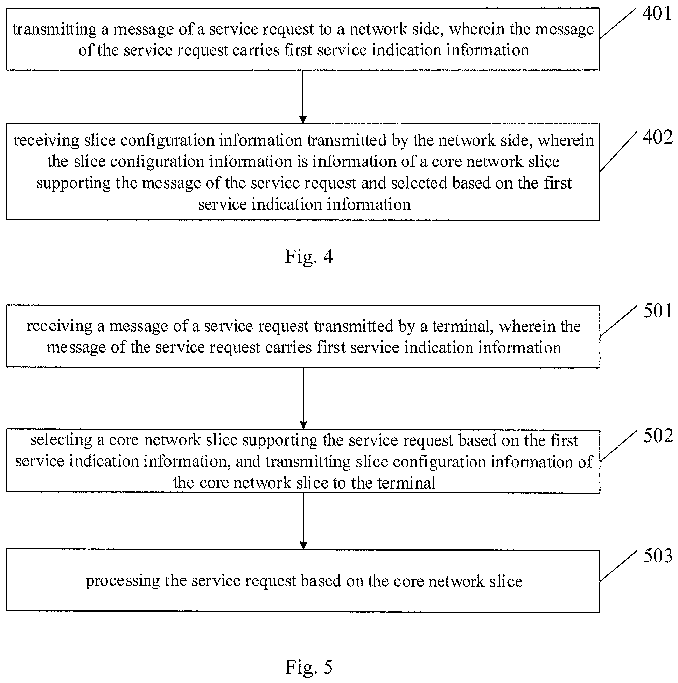

Referring to Fig.4, Fig. 4 is yet another schematic flow chart of the method for processing the service request provided by the embodiments of the present disclosure. As shown in Fig.4, the method includes the following steps 401-402.

Step 401: transmitting a message of a service request to a network side, wherein the message of the service request carries first service indication information.

In this step, when the terminal initiates a service request, the terminal transmits the message of the service request to the network side. The message of the service request carries the first service indication information; the first service indication information may be indication information such as digital information or signaling information. The core network slice is selected based on the first service indication information.

Step 402: receiving slice configuration information transmitted by the network side, wherein the slice configuration information is information of a core network slice supporting the message of the service request and selected based on the first service indication information, the core network slice includes a core network capability parameter and/or a core network function module.

In this step, based on the first service indication information, the core network slice matching the service request message may be selected from a set of core network slices obtained in advance. During the selection, a correspondence may firstly be established between service indication information and core network slices, and then the first service indication information is identified so as to determine the core network slice supporting the service request. The set of core network slices obtained in advance may be a set of core network slices selected by the network side based on the subscription information of the terminal and the capability parameter of the terminal. The capability parameter of the terminal may be a traffic type such as the Enhanced Mobile Broadband (EMBB) and\or different identifiers of the Mobility Management Entity (MME). Each of the core network slices includes a core network capability parameter and/or a core network function module, such as different network characteristic functional capabilities, different network modules.

After the receiving the slice configuration information transmitted by the network side, the method further includes performing a slice configuration procedure based on the slice configuration information, and transmitting an acknowledgement message to the network side after the slice configuration procedure is completed.

In this embodiment, after the network side receives the slice configuration information successfully, the network side configures the core network slice based on the slice configuration information. The slice configuration procedure includes activating the core network slice, and performing other wireless configurations. Further, the network side transmits, to the terminal, the acknowledgement message indicating completion of the slice configuration procedure, so that the terminal is informed of the situation at the network side through the acknowledgement message.

The slice configuration information includes one or more of: a slice identifier of the slice and the core network capability parameter and/or the core network function module supported by the core network slice.

In this embodiment, the slice identifier may be a slice name of the core network slice, the service type supported by the slice, or the like; the core network capability parameter supported by the core network slice may be the transmission rate of the core network, the transmission capacity of the core network, or the like; and the core network function module is, for example, the EMBB capability, the MME capability, etc.

In the embodiments of the present disclosure, the message of the service request is transmitted to the network side, and the message of the service request carries the first service indication information; the slice configuration information transmitted by the network side is received, wherein, the slice configuration information is information of the core network slice supporting the message of the service request and selected based on the first service indication information, the core network slice includes a core network capability parameter and/or a core network function module. In this way, when the terminal transmits the service request, the terminal obtains information of the core network slice supporting the service request, thereby enabling the selection of the core network slice to be performed in a flexible manner.

Referring to Fig.5, Fig.5 is still yet another schematic flow chart of the method for processing the service request provided by the embodiments of the present disclosure. As shown in Fig.5, the method includes the following steps 501-503.

Step 501: receiving a message of a service request transmitted by a terminal, wherein the message of the service request carries first service indication information.

In this step, when the terminal initiates the service request, the terminal transmits the message of the service request to the network side. The message of the service request carries the first service indication information. The first service indication information may be indication information such as digital information or signaling information. The core network slice is selected based on the first service indication information.

Step 502: selecting a core network slice supporting the service request based on the first service indication information, and transmitting slice configuration information of the core network slice to the terminal, wherein the core network slice includes a core network capability parameter and/or a core network function module.

In this step, based on the first service indication information, a core network slice matching the service indication information may be selected from a set of core network slices obtained in advance. During the selection, a correspondence may be firstly established between service indication information and the set of core network slices, and then the first service indication information is identified so as to determine the core network slice supporting the service request. The set of core network slices obtained in advance may be selected by the network side based on the subscription information of the terminal and the capability parameter of the terminal. The capability parameter of the terminal may be a traffic type such as an Enhanced Mobile Broadband (EMBB) and\or different identifiers of Mobility Management Entities (MMEs). The core network slice includes a core network capability parameter and/or a core network function module, such as different network characteristic functional capabilities, different network modules.

Step 503: processing the service request by means of the core network slice.

In this step, the service request is transmitted through the core network slice, or the service request is loaded onto the core network slice. In this way, the service request transmitted by the terminal may be processed in a flexible manner, thus improving the effect of processing the service request.

Optionally, prior to the processing the service request by means of the core network slice, the method further includes: determining whether the core network slice is activated or not; if the core network slice is not activated, activating the core network slice and after the core network slice is activated, proceeding to the processing the service request by means of the core network slice; if the core network slice is activated, proceeding directly to processing the service request by means of the core network slice.

In this embodiment, when the core network determines the core network slice for processing the service request, a status of the core network slice is identified, and only if the core network slice is activated, the core network slice is used to process the service request, thereby improving the accuracy of processing the service request and preventing the faulty operation effectively.

After the transmitting the slice configuration information of the core network slice to the terminal, the method further includes receiving a slice acknowledgement message transmitted by the terminal after a slice configuration procedure is completed based on the slice configuration information by the terminal.

In this embodiment, after the network side receives the slice configuration information, the network side configures the core network slice based on the slice configuration information. The configuration procedure includes activating the core network slice, and performing other wireless configurations. Further, the network side transmits, to the terminal, the acknowledgement message indicating completion of the configuration procedure, so that the terminal is informed of the situation at the network side through the acknowledgement message.

Optionally, the slice configuration information includes one or more of: a slice identifier of the slice and the core network capability parameter and/or the core network function module supported by the core network slice.

In this embodiment, the slice identifier of the slice may be the slice name of the slice, the service type supported by the slice, or the like; the core network capability parameter supported by the core network slice may be the transmission rate of the core network, the transmission capacity of the core network, or the like; and the core network function module is, for example, the EMBB capability, the MME capability, etc.

In the embodiments of the present disclosure, the message of the service request transmitted by the terminal is received and the message of the service request carries first service indication information; a core network slice supporting the service request is selected in accordance with the first service indication information, and slice configuration information of the core network slice is transmitted to the terminal, the core network slice including the core network capability parameter and/or the core network function module; the service request is processed by means of the core network slice. The network side selects the core network slice based on the message of the service request transmitted by the terminal, thereby enabling the selection of the core network slice to be performed in a flexible manner.

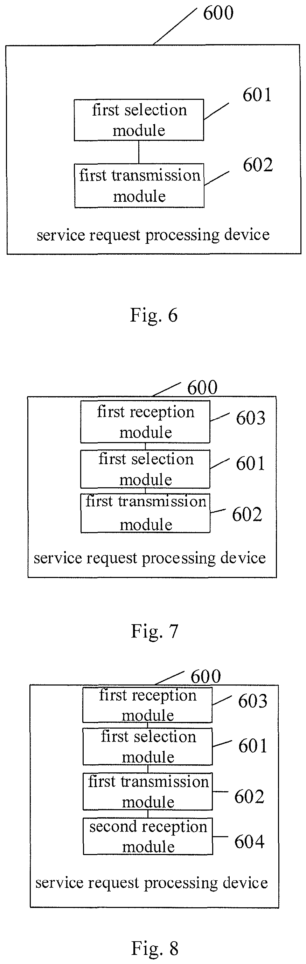

Referring to Fig.6, Fig. 6 is a schematic structural diagram of a device for processing a service request provided by the embodiments of the present disclosure. As shown in Fig.6, the device 600 for processing the service request includes a first selection module 601 and a first transmission module 602.

The first selection module 601 is configured to select, from a set of core network slices obtained in advance, a first core network slice supporting the service request when a terminal initiates the service request, wherein the set of core network slices includes a plurality of core network slices and each of the core network slices includes a core network capability parameter and/or a core network function module.

The first transmission module 602 is configured to transmit slice configuration information of the first core network slice and a message of a service request to a network side.

As shown in Fig.7, the device 600 for processing the service request further includes a first reception module 603.

The first reception module 603 is configured to receive information of the set of core network slices transmitted by the network side, wherein the set of core network slices is a set of core network slices selected in accordance with subscription information of the terminal and a capability parameter of the terminal.

As shown in Fig.8, the device 600 for processing the service request further includes a second reception module 604.

The second reception module 604 is configured to receive an acknowledgement message transmitted by the network side after a slice configuration procedure is completed based on the slice configuration information by the network side.

The slice configuration information includes one or more of: a slice identifier of the slice and the core network capability parameter and/or the core network function module supported by the core network slice.

It is noted that the device 600 for processing the service request according to the embodiments of the present disclosure may implement any one of the embodiments of the method of the present disclosure, and achieve same advantageous effects, thus a repeated description of the device 600 is omitted herein.

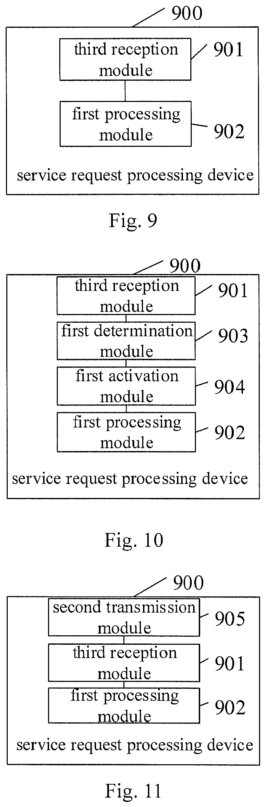

Referring to Fig.9, Fig. 9 is another schematic structural diagram of a device 900 for processing the service request provided by the embodiments of the present disclosure. As shown in Fig.9, the device 900 for processing the service request includes a third reception module 901 and a first processing module 902.

The third reception module 901 is configured to receive a message of a service request and slice configuration information of a core network slice transmitted by a terminal, wherein the core network slice includes a core network capability parameter and/or a core network function module.

The first processing module 902 is configured to process the service request based on the core network slice.

Optionally, as shown in Fig. 10, the device 900 for processing the service request further includes a first determination module 903 and a first activation module 904.

The first determination module 903 is configured to determine whether the core network slice is activated or not.

The first activation module 904 is configured to: if the core network slice is not activated, activate the core network slice, and after the core network slice is activated, proceed to the processing the service request based on the core network slice; if the core network slice is activated, proceed directly to the processing the service request based on the core network slice.

As shown in Fig. 11, the device 900 for processing the service request further includes a second transmission module 905. The second transmission module 905 is configured to transmit information of a set of core network slices to the terminal, wherein the set of core network slices is a set of core network slices selected in accordance with subscription information of the terminal and a capability parameter of the terminal.

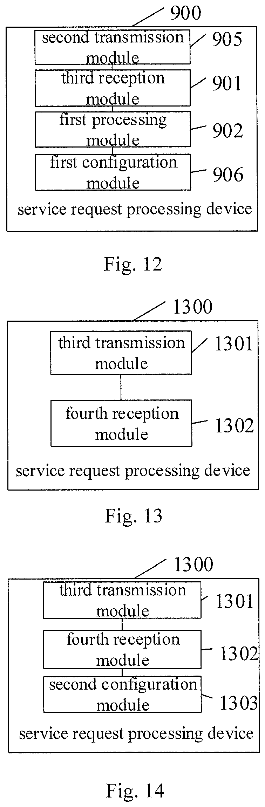

As shown in Fig. 12, the device 900 for processing the service request further includes a first configuration module 906. The first configuration module 906 is configured to perform a slice configuration procedure based on the slice configuration information, and after the slice configuration procedure is completed, transmit an acknowledgement message to the terminal.

The slice configuration information includes one or more of: a slice identifier of the core network slice and the core network capability parameter and/or the core network function module supported by the core network slice.

It is noted that, the device 900 for processing the service request according to the embodiment may implement any one of the embodiments of the method of the present disclosure, and achieve a same advantageous effect, thus a repeated description of the device 900 is omitted herein.

Referring to Fig. 13, Fig. 13 is a schematic structural diagram of a device 1300 for processing the service request provided by the embodiments of the present disclosure. As shown in Fig. 13, the device 1300 for processing the service request includes a third transmission module 1301 and a fourth reception module 1302.

The third transmission module 1301 is configured to transmit a message of a service request to a network side, wherein the message of the service request carries first service indication information.

The fourth reception module 1302 is configured to receive slice configuration information transmitted by the network side, wherein the slice configuration information is information of a core network slice supporting the message of the service request and selected based on the first service indication information, the core network slice includes a core network capability parameter and/or a core network function module.

As shown in Fig. 14, the device 1300 for processing the service request further includes a second configuration module 1303.

The second configuration module 1303 is configured to perform a slice configuration procedure based on the slice configuration information, and transmit an acknowledgement message to the network side after the slice configuration procedure is completed.

The slice configuration information includes one or more of: a slice identifier of the core network slice and the core network capability parameter and/or the core network function module supported by the core network slice.

It is noted that the device 1300 for processing the service request according to the embodiment may implement any one of the embodiments of the method of the present disclosure, and achieve the same advantageous effect, thus a repeated description of the device 1300 is omitted herein.

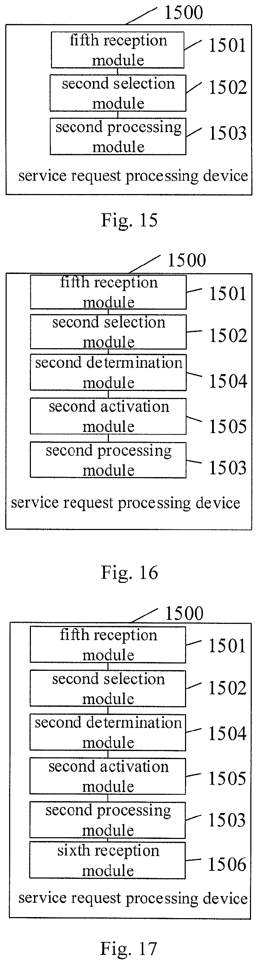

Referring to Fig. 15, Fig. 15 is still yet another schematic structural diagram of a device 1500 for processing the service request provided by the embodiments of the present disclosure. As shown in Fig. 15, the device 1500 for processing the service request includes a fifth reception module 1501, a second selection module 1502, and a second processing module 1503.

The fifth reception module 1501 is configured to receive a message of a service request transmitted by a terminal, wherein the message of the service request carries first service indication information.

The second selection module 1502 is configured to select a core network slice supporting the service request based on the first service indication information, and transmitting slice configuration information of the core network slice to the terminal, wherein the core network slice includes a core network capability parameter and/or a core network function module.

The second processing module 1503 is configured to process the service request by means of the core network slice.

Optionally, as shown in Fig. 16, the device 1500 for processing the service request further includes a second determination module 1504 and a second activation module 1505.

The second determination module 1504 is configured to determine whether the core network slice is activated or not.

The second activation module 1505 is configured to: if the core network slice is not activated, activate the core network slice and after the core network slice is activated, proceed to the processing the service request by means of the core network slice; if the core network slice is activated, proceeding directly to processing the service request by means of the core network slice.

As shown in Fig. 17, the device for processing the service request further includes a sixth reception module 1506.

The sixth reception module 1506 is configured to receive a slice acknowledgement message transmitted by the terminal after a slice configuration procedure is completed based on the slice configuration information by the terminal.

Optionally, the slice configuration information includes one or more of: a slice identifier of the slice and the core network capability parameter and/or the core network function module supported by the core network slice.

It is noted that the device 1500 for processing the service request according to the embodiment may implement any one of the embodiments of the method of the present disclosure, and achieve the same advantageous effect, thus a repeated description of the device 1500 is omitted herein.

It should be appreciated that the method and device disclosed in the embodiments provided by this disclosure may be implemented by other means. For example, the aforementioned device embodiments are merely illustrative, e.g., a partition of a unit is merely a logic functional partition, and other partitions may be implemented in practice, such as multiple units or components may be combined or integrated into another system, or some features may be ignored or not performed. Furthermore, the shown or discussed mutual coupling or direct coupling or communication connection can be achieved by indirect coupling or communication connection of some interfaces, devices or units in electric, mechanical or other ways.

Additionally, the functional units in the various embodiments of the present disclosure may be integrated in one processing unit, or each unit may be physically alone, or two or more units may be integrated in one unit. The above integrated unit may be implemented in a form of hardware or in a form of hardware in conjunction with software function module.

When the integrated unit is implemented in a form of the software function module, the integrated unit may be stored in the computer-readable storage medium. The software function module stored on the storage medium includes instructions configured to be executed by a computer device (which may be a personal computer, a server or a network device, etc.) to implement part of the steps of the methods of the embodiments of the present disclosure. The storage medium includes a Universal Serial Bus (USB) disk, a removable hard disk, a Read-Only Memory (ROM), a Random Access Memory (RAM), a magnetic disk, an optical disc, and other medium capable of storing program code.

The above describes optionally implementations of the present disclosure. It should be noted that modifications and replacements may be made in the embodiments by a person skilled in the art without departing from the principle of the present disclosure, and these modifications and replacements shall fall within the scope of the present disclosure.

## Claims

1. A method for processing a service request, **characterized in that**, the method is applied to a terminal and comprises:
selecting (201), from a set of core network slices obtained in advance, a first core network slice supporting the service request when the terminal initiates the service request, wherein the set of core network slices comprises a plurality of core network slices and each of the plurality of core network slices comprises a core network capability parameter and/or a core network function module;
transmitting (202) slice configuration information of the first core network slice and a message of a service request to a network side;
wherein, prior to the selecting (201), from the set of core network slices obtained in advance, the first core network slice supporting the service request when the terminal initiates the service request, the method further comprises: receiving information of the set of core network slices transmitted by the network side, wherein the set of core network slices is a set of core network slices selected in accordance with subscription information of the terminal and a capability parameter of the terminal; and,
after the transmitting the message of the service request to the network side, the method further comprises: receiving an acknowledgement message transmitted by the network side after a slice configuration procedure is completed based on the slice configuration information by the network side;
wherein the slice configuration information comprises one or more of: a slice identifier of the core network slice and a core network capability parameter and/or a core network function module supported by the core network slice.

2. A method for processing a service request, **characterized in that**, the method is applied to a network side and comprises:
receiving (301) a message of a service request and slice configuration information of a core network slice transmitted by a terminal, wherein the core network slice comprises a core network capability parameter and/or a core network function module;
processing (302) the service request based on the core network slice;
prior to the receiving (301) the message of the service request and the slice configuration information of the core network slice transmitted by the terminal, the method further comprises: transmitting information of a set of core network slices to the terminal, wherein the set of core network slices is a set of core network slices selected in accordance with subscription information and a capability parameter of the terminal; and,
after the processing (302) the service request based on the core network slice, the method further comprises: performing a slice configuration procedure based on the slice configuration information, and transmitting an acknowledgement message to the terminal after the slice configuration procedure is completed;
wherein the slice configuration information comprises one or more of: a slice identifier of the core network slice and a core network capability parameter and/or a core network function module supported by the core network slice.

3. The method according to claim 2, wherein prior to the processing (302) the service request based on the core network slice, the method further comprises:
determining whether the core network slice is activated or not;
if the core network slice is not activated, activating the core network slice and proceeding to the processing the service request based on the core network slice after the core network slice is activated;
if the core network slice is activated, proceeding directly to processing the service request based on the core network slice.

4. A method for processing a service request, the method being applied to a terminal and **characterized by** comprising:
transmitting a message of a service request to a network side, wherein the message of the service request carries first service indication information;
receiving slice configuration information transmitted by the network side, wherein the slice configuration information is information of a core network slice supporting the message of the service request and selected based on the first service indication information, the core network slice comprises a core network capability parameter and/or a core network function module;
wherein after the receiving the slice configuration information transmitted by the network side, the method further comprises: performing a slice configuration procedure based on the slice configuration information, and transmitting an acknowledgement message to the network side after the slice configuration procedure is completed;
wherein the slice configuration information comprises one or more of:
a slice identifier of the core network slice and a core network capability parameter and/or a core network function module supported by the core network slice.

5. A method for processing a service request, the method being applied to a network side and **characterized by** comprising:
receiving a message of a service request transmitted by a terminal, wherein the message of the service request carries first service indication information;
selecting a core network slice supporting the service request based on the first service indication information, and transmitting slice configuration information of the core network slice to the terminal, wherein the core network slice comprises a core network capability parameter and/or a core network function module;
processing the service request based on the core network slice;
after the transmitting the slice configuration information of the core network slice to the terminal, the method further comprises:
receiving a slice acknowledgement message transmitted by the terminal after a slice configuration procedure is completed based on the slice configuration information by the terminal.

6. The method according to claim 5, wherein prior to the processing the service request based on the core network slice, the method further comprises:
determining whether the core network slice is activated or not;
if the core network slice is not activated, activating the core network slice and after the core network slice is activated, proceeding to the processing the service request based on the core network slice;
if the core network slice is activated, proceeding directly to processing the service request based on the core network slice.

7. A device for processing a service request, **characterized by** comprising:
a first selection module (601), configured to select, from a set of core network slices obtained in advance, a first core network slice supporting the service request when a terminal initiates the service request, wherein the set of core network slices comprises a plurality of core network slices and each of the plurality of core network slices comprises a core network capability parameter and/or a core network function module;
a first transmission module (602), configured to transmit slice configuration information of the first core network slice and a message of the service request to a network side;
wherein the device further comprises:
a first reception module, configured to receive information of the set of core network slices transmitted by the network side, wherein the set of core network slices is a set of core network slices selected in accordance with subscription information of the terminal and a capability parameter of the terminal; and,
a second reception module, configured to receive an acknowledgement message transmitted by the network side after a slice configuration procedure is completed based on the slice configuration information by the network side;
wherein the slice configuration information comprises one or more of: a slice identifier of the core network slice and a core network capability parameter and/or a core network function module supported by the core network slice.

8. A device for processing a service request, **characterized by** comprising:
a third reception module (901), configured to receive a message of the service request and slice configuration information of a core network slice transmitted by a terminal, wherein the core network slice comprises a core network capability parameter and/or a core network function module;
a first processing module (902), configured to process the service request based on the core network slice;
wherein the device further comprises:
a second transmission module, configured to transmit information of a set of core network slices to the terminal, wherein the set of core network slices is a set of core network slices selected in accordance with subscription information of the terminal and a capability parameter of the terminal; and,
a first configuration module, configured to perform a slice configuration procedure based on the slice configuration information, and after the slice configuration procedure is completed, transmit an acknowledgement message to the terminal;
wherein the slice configuration information comprises one or more of: a slice identifier of the core network slice and a core network capability parameter and/or a core network function module supported by the core network slice.

9. A device for processing a service request, **characterized by** comprising:
a third transmission module, configured to transmit a message of the service request to a network side, wherein the message of the service request carries first service indication information;
a fourth reception module, configured to receive slice configuration information transmitted by the network side, wherein the slice configuration information is information of a core network slice supporting the message of the service request and selected based on the first service indication information, the core network slice comprises a core network capability parameter and/or a core network function module;
wherein the device further comprises:
a second configuration module, configured to perform a slice configuration procedure based on the slice configuration information, and transmit an acknowledgement message to the network side after the slice configuration procedure is completed;
wherein the slice configuration information comprises one or more of: a slice identifier of the core network slice and a core network capability parameter and/or a core network function module supported by the core network slice.

10. A device for processing a service request, **characterized by** comprising:
a fifth reception module, configured to receive a message of a service request transmitted by a terminal, wherein the message of the service request carries first service indication information;
a second selection module, configured to select a core network slice supporting the service request based on the first service indication information, and transmitting slice configuration information of the core network slice to the terminal, wherein the core network slice comprises a core network capability parameter and/or a core network function module; and
a second processing module, configured to process the service request based on the core network slice;
wherein the device further comprises:
a sixth reception module, configured to receive a slice acknowledgement message transmitted by the terminal after a slice configuration procedure is completed based on the slice configuration information by the terminal.

## Patentansprüche

1. Verfahren zur Bearbeitung einer Dienstanforderung, **dadurch gekennzeichnet, dass** das Verfahren auf ein Endgerät angewendet wird und umfasst:
Auswählen (201) eines ersten Kernnetz-Slice, der die Dienstanforderung unterstützt, aus einem Satz von im Voraus erhaltenen Kernnetz-Slices, wenn das Endgerät die Dienstanforderung initiiert, wobei der Satz von Kernnetz-Slices eine Vielzahl von Kernnetz-Slices umfasst und jede der Vielzahl von Kernnetz-Slices einen Kernnetzfähigkeitsparameter und/oder ein Kernnetzfunktionsmodul umfasst;
Senden (202) von Slice-Konfigurationsinformation des ersten Kernnetz-Slice und einer Nachricht einer Dienstanforderung an eine Netzseite;
wobei das Verfahren vor dem Auswählen (201) des ersten Kernnetz-Slices, der die Dienstanforderung unterstützt, wenn das Endgerät die Dienstanforderung initiiert, aus dem Satz von Kernnetz-Slices, die im Voraus erhalten wurden, ferner umfasst:
Empfangen von Information über den Satz von Kernnetz-Slices, die von der Netzseite gesendet werden, wobei der Satz von Kernnetz-Slices ein Satz von Kernnetz-Slices ist, der gemäß Abonnementinformation des Endgeräts und einem Fähigkeitsparameter des Endgeräts ausgewählt wird; und,
nach dem Senden der Nachricht der Dienstanforderung an die Netzseite das Verfahren ferner umfasst: Empfangen einer Bestätigungsnachricht, die von der Netzseite gesendet wird, nachdem ein Slice-Konfigurationsverfahren auf der Grundlage der Slice-Konfigurationsinformation durch die Netzseite abgeschlossen ist;
wobei die Slice-Konfigurationsinformation eines oder mehrere der folgenden Elemente umfassen: eine Slice-Kennung des Kernnetz-Slice und einen Kernnetz-Fähigkeitsparameter und/oder ein Kernnetz-Funktionsmodul, das von dem Kernnetz-Slice unterstützt wird.

2. Verfahren zur Verarbeitung einer Dienstanforderung, **dadurch gekennzeichnet, dass** das Verfahren auf einer Netzseite angewendet wird und umfasst:
Empfangen (301) einer Nachricht einer Dienstanforderung und von Slice-Konfigurationsinformation eines Kernnetz-Slice, die von einem Endgerät gesendet wurden, wobei der Kernnetz-Slice einen Kernnetz-Fähigkeitsparameter und/oder ein Kernnetz-Funktionsmodul umfasst;
Verarbeitung (302) der Dienstanforderung auf der Grundlage des Kernnetz-Slice; wobei
vor dem Empfangen (301) der Nachricht der Dienstanforderung und der Slice-Konfigurationsinformation des Kernnetz-Slice, die von dem Endgerät gesendet
werden, das Verfahren ferner umfasst: Senden von Information eines Satzes von Kernnetz-Slices an das Endgerät, wobei der Satz von Kernnetz-Slices ein Satz von Kernnetz-Slices ist, der in Übereinstimmung mit Abonnementinformation und einem Fähigkeitsparameter des Endgeräts ausgewählt wird; und,
nach der Verarbeitung (302) der Dienstanforderung auf der Grundlage des Kernnetz-Slice, wobei das Verfahren ferner umfasst: Durchführen einer Slice-Konfigurationsprozedur auf der Grundlage der Slice-Konfigurationsinformation, und Senden einer Bestätigungsnachricht an das Endgerät, nachdem die Slice-Konfigurationsprozedur abgeschlossen ist;
wobei die Slice-Konfigurationsinformation eines oder mehrere der folgenden Elemente umfasst: eine Slice-Kennung des Kernnetz-Slice und einen Kernnetz-Fähigkeitsparameter und/oder ein Kernnetz-Funktionsmodul, das von dem Kernnetz-Slice unterstützt wird.

3. Verfahren nach Anspruch 2, wobei das Verfahren vor der Verarbeitung (302) der Dienstanforderung auf der Grundlage des Kernnetz-Slice ferner umfasst:
Bestimmen, ob der Kernnetz-Slice aktiviert ist oder nicht;
wenn der Kernnetz-Slice nicht aktiviert ist, Aktivieren des Kernnetz-Slice und Fortfahren mit der Verarbeitung der Dienstanforderung auf der Grundlage des Kernnetz-Slice, nachdem der Kernnetz-Slice aktiviert ist;
wenn der Kernnetz-Slice aktiviert ist, direktes Fortfahren mit der Bearbeitung der Dienstanforderung auf der Grundlage des Kernnetz-Slice.

4. Verfahren zur Verarbeitung einer Dienstanforderung, wobei das Verfahren auf ein Endgerät angewendet wird und **dadurch gekennzeichnet ist, dass** es umfasst:
Senden einer Nachricht einer Dienstanforderung an eine Netzseite, wobei die Nachricht der Dienstanforderung erste Dienstanzeigeinformation enthält;
Empfangen von Slice-Konfigurationsinformation, die von der Netzseite gesendet wird, wobei die Slice-Konfigurationsinformation Information über einen Kernnetz-Slice ist, der die Nachricht der Dienstanforderung unterstützt und auf der Grundlage der ersten Dienstanzeigeinformation ausgewählt wird, wobei der Kernnetz-Slice einen Kernnetz-Fähigkeitsparameter und/oder ein Kernnetz-Funktionsmodul umfasst;
wobei das Verfahren nach dem Empfang der von der Netzseite gesendeten Slice-Konfigurationsinformation ferner umfasst: Durchführen eines Slice-Konfigurationsvorgangs auf der Grundlage der Slice-Konfigurationsinformation und Senden einer Bestätigungsnachricht an die Netzseite, nachdem der Slice-Konfigurationsvorgang abgeschlossen ist;
wobei die Slice-Konfigurationsinformation eines oder mehrere der folgenden Elemente umfasst:
einen Slice-Identifikator des Kernnetz-Slice und einen Kernnetz-Fähigkeitsparameter und/oder ein Kernnetz-Funktionsmodul, das von dem Kernnetz-Slice unterstützt wird.

5. Verfahren zur Verarbeitung einer Dienstanforderung, wobei das Verfahren auf eine Netzseite angewendet wird und **dadurch gekennzeichnet ist, dass** es umfasst:
Empfangen einer von einem Endgerät gesendeten Nachricht einer Dienstanforderung, wobei die Nachricht der Dienstanforderung erste Dienstanzeigeinformation enthält;
Auswählen eines Kernnetz-Slice, der die Dienstanforderung unterstützt, auf der Grundlage der ersten Dienstanzeigedaten, und Senden von Scheibenkonfigurationsdaten des Kernnetz-Slice an das Endgerät, wobei das Kernnetz-Slice einen Kernnetzfähigkeitsparameter und/oder ein Kernnetzfunktionsmodul umfasst;
Bearbeitung der Dienstanforderung auf der Grundlage des Kernnetz-Slice; wobei
nach dem Senden der Slice-Konfigurationsinformation des Kernnetz-Slice an das Endgerät das Verfahren ferner umfasst:
Empfangen einer vom Endgerät gesendeten Slice-Bestätigungsnachricht, nachdem ein Slice-Konfigurationsverfahren auf der Grundlage der Slice-Konfigurationsinformation durch das Endgerät abgeschlossen wurde.

6. Verfahren nach Anspruch 5, wobei das Verfahren vor der Verarbeitung der Dienstanforderung auf der Grundlage des Kernnetz-Slice ferner umfasst:
Bestimmen, ob der Kernnetz-Slice aktiviert ist oder nicht;
wenn der Kernnetz-Slice nicht aktiviert ist, Aktivieren des Kernnetz-Slice und, nachdem der Kernnetz-Slice aktiviert ist, Fortfahren mit der Verarbeitung der Dienstanforderung auf der Grundlage des Kernnetz-Slice;
wenn der Kernnetz-Slice aktiviert ist, direktes Fortfahren zur Bearbeitung der Dienstanforderung auf der Grundlage des Kernnetz-Slice.

7. Vorrichtung zur Verarbeitung einer Dienstanforderung, **dadurch gekennzeichnet, dass** sie umfasst:
ein erstes Auswahlmodul (601), das so konfiguriert ist, dass es aus einem Satz von Kernnetz-Slices, die im Voraus erhalten wurden, einen ersten Kernnetz-Slice auswählt, der die Dienstanforderung unterstützt, wenn ein Endgerät die Dienstanforderung initiiert, wobei der Satz von Kernnetz-Slices eine Vielzahl von Kernnetz-Slices umfasst und jede der Vielzahl von Kernnetz-Slices einen Kernnetzfähigkeitsparameter und/oder ein Kernnetzfunktionsmodul umfasst;
ein erstes Sendemodul (602), das so konfiguriert ist, dass es Slice-Konfigurationsinformation des ersten Kernnetz-Slice und eine Nachricht der Dienstanforderung an eine Netzseite sendet;
wobei die Vorrichtung ferner umfasst:
ein erstes Empfangsmodul, das so konfiguriert ist, dass es Information über den Satz von Kernnetz-Slices empfängt, die von der Netzseite gesendet werden, wobei der Satz von Kernnetz-Slices ein Satz von Kernnetz-Slices ist, der in Übereinstimmung mit Abonnementinformation des Endgeräts und einem Fähigkeitsparameter des Endgeräts ausgewählt wird; und,
ein zweites Empfangsmodul, das so konfiguriert ist, dass es eine von der Netzseite gesendete Bestätigungsnachricht empfängt, nachdem ein Slice-Konfigurationsverfahren auf der Grundlage der Slice-Konfigurationsinformation von der Netzseite abgeschlossen wurde;
wobei die Slice-Konfigurationsinformation eines oder mehrere der folgenden Elemente umfasst: eine Slice-Kennung der Kernnetz-Slice und einen Kernnetz-Fähigkeitsparameter und/oder ein Kernnetz-Funktionsmodul, das von dem Kernnetz-Slice unterstützt wird.

8. Vorrichtung zur Bearbeitung einer Dienstanforderung, **dadurch gekennzeichnet, dass** sie umfasst:
ein drittes Empfangsmodul (901), das so konfiguriert ist, dass es eine Nachricht der Dienstanforderung und Slice-Konfigurationsinformation eines Kernnetz-Slice empfängt, die von einem Endgerät gesendet werden, wobei der Kernnetz-Slice einen Kernnetz-Fähigkeitsparameter und/oder ein Kernnetz-Funktionsmodul umfasst;
ein erstes Verarbeitungsmodul (902), das so konfiguriert ist, dass es die Dienstanforderung auf der Grundlage des Kernnetz-Slice verarbeitet;
wobei die Vorrichtung weiterhin umfasst:
ein zweites Sendemodul, das so konfiguriert ist, dass es Information eines Satzes von Kernnetz-Slices an das Endgerät sendet, wobei der Satz von Kernnetz-Slices ein Satz von Kernnetz-Slices ist, der in Übereinstimmung mit Abonnementinformation des Endgeräts und einem Fähigkeitsparameter des Endgeräts ausgewählt wird; und,
ein erstes Konfigurationsmodul, das so konfiguriert ist, dass es eine Slice-Konfigurationsprozedur auf der Grundlage der Slice-Konfigurationsinformation durchführt und nach Abschluss der Slice-Konfigurationsprozedur eine Bestätigungsnachricht an das Endgerät sendet;
wobei die Slice-Konfigurationsinformation eines oder mehrere der folgenden Elemente umfasst: eine Slice-Kennung des Kernnetz-Slice und einen Kernnetz-Fähigkeitsparameter und/oder ein Kernnetz-Funktionsmodul, das von dem Kernnetz-Slice unterstützt wird.

9. Vorrichtung zur Verarbeitung einer Dienstanforderung, **dadurch gekennzeichnet, dass** sie umfasst:
ein drittes Sendemodul, das so konfiguriert ist, dass es eine Nachricht der Dienstanforderung an eine Netzseite sendet, wobei die Nachricht der Dienstanforderung erste Dienstanzeigeinformation enthält;
ein viertes Empfangsmodul, das so konfiguriert ist, dass es von der Netzseite gesendete Slice-Konfigurationsinformation empfängt, wobei die Slice-Konfigurationsinformation Information über einen Kernnetz-Slice ist, der die Nachricht der Dienstanforderung unterstützt und auf der Grundlage der ersten Dienstanzeigeinformation ausgewählt wird, wobei der Kernnetz-Slice einen Kernnetz-Fähigkeitsparameter und/oder ein Kernnetz-Funktionsmodul umfasst;
wobei die Vorrichtung weiterhin umfasst:
ein zweites Konfigurationsmodul, das so konfiguriert ist, dass es eine Slice-Konfigurationsprozedur auf der Grundlage der Slice-Konfigurationsinformation durchführt und eine Bestätigungsnachricht an die Netzseite sendet, nachdem die Slice-Konfigurationsprozedur abgeschlossen ist;
wobei die Slice-Konfigurationsinformation eines oder mehrere der folgenden Elemente umfasst: eine Slice-Kennung des Kernnetz-Slice und einen Kernnetz-Fähigkeitsparameter und/oder ein Kernnetz-Funktionsmodul, das von dem Kernnetz-Slice unterstützt wird.

10. Vorrichtung zur Verarbeitung einer Dienstanforderung, **dadurch gekennzeichnet, dass** sie umfasst:
ein fünftes Empfangsmodul, das so konfiguriert ist, dass es eine Nachricht einer von einem Endgerät gesendeten Dienstanforderung empfängt, wobei die Nachricht der Dienstanforderung erste Dienstanzeigeinformation enthält;
ein zweites Auswahlmodul, das so konfiguriert ist, dass es einen Kernnetz-Slice auswählt, der die Dienstanforderung auf der Grundlage der ersten Dienstanzeigeinformation unterstützt, und Slice-Konfigurationsinformation der Kernnetzscheibe an das Endgerät sendet, wobei der Kernnetz-Slice einen Kernnetz-Fähigkeitsparameter und/oder ein Kernnetz-Funktionsmodul umfasst; und
ein zweites Verarbeitungsmodul, das so konfiguriert ist, dass es die Dienstanforderung auf der Grundlage des Kernnetz-Slice verarbeitet;
wobei die Vorrichtung weiterhin umfasst:
ein sechstes Empfangsmodul, das so konfiguriert ist, dass es eine vom Endgerät gesendete Slice-Bestätigungsnachricht empfängt, nachdem ein Slice-Konfigurationsverfahren auf der Grundlage der Slice-Konfigurationsinformation durch das Endgerät abgeschlossen wurde.

## Revendications

1. Procédé de traitement d'une demande de services, **caractérisé en ce que**, le procédé est appliqué à un terminal et consiste à :
sélectionner (201), dans un ensemble de tranches de réseau central obtenu à l'avance, une première tranche de réseau central prenant en charge la demande de services lorsque le terminal lance la demande de services, l'ensemble de tranches de réseau central comprenant une pluralité de tranches de réseau central et chaque tranche de la pluralité des tranches de réseau central comprenant un paramètre de capacité de réseau central et/ou un module de fonction de réseau central ;
transmettre (202) des informations de configuration de tranche de la première tranche de réseau central et un message d'une demande de services à un côté réseau ;
dans lequel, avant la sélection (201), dans l'ensemble de tranches de réseau central obtenu à l'avance, la première tranche de réseau central prend en charge la demande de services lorsque le terminal lance la demande de services, le procédé consistant en outre à : recevoir des informations de l'ensemble des tranches de réseau central transmis par le côté réseau, l'ensemble des tranches de réseau central étant un ensemble de tranches de réseau central sélectionné en fonction des informations d'abonnement du terminal et d'un paramètre de capacité du terminal ; et
après la transmission du message de la demande de services au côté réseau, le procédé consistant en outre à : recevoir un message d'accusé de réception transmis par le côté réseau après qu'une procédure de configuration de tranche est effectuée sur la base des informations de configuration de tranche par le côté réseau ;
les informations de configuration de tranche comprenant un élément parmi un ou plusieurs éléments suivants : un identifiant de tranche de la tranche de réseau central et un paramètre de capacité de réseau central et/un module de fonction de réseau central pris en charge par la tranche de réseau central.

2. Procédé de traitement d'une demande de services, **caractérisé en ce que**, le procédé est appliqué à un côté réseau et consiste à :
recevoir (301) un message d'une demande de services et des informations de configuration de tranche d'une tranche de réseau central transmises par un terminal, la tranche de réseau central comprenant un paramètre de capacité de réseau central et/ou un module de fonction de réseau central ;
traiter (302) la demande de services en fonction de la tranche de réseau central ;
avant la réception (301), le message de la demande de service et les informations de configuration de tranche de la tranche de réseau central transmises par le terminal, le procédé consistant en outre à : transmettre des informations de l'ensemble des tranches de réseau central transmis au terminal, l'ensemble de tranches de réseau central étant un ensemble de tranches de réseau central sélectionné en fonction des informations d'abonnement et d'un paramètre de capacité du terminal ; et,
après le traitement (302) de la demande de services en fonction de la tranche de réseau central, le procédé consistant en outre à : effectuer une procédure de configuration de tranche sur la base des informations de configuration de tranche, et transmettre un message d'accusé de réception au terminal après que la procédure de configuration de tranche a été effectuée ;
les informations de configuration de tranche comprenant un élément parmi un ou plusieurs éléments suivants : un identifiant de tranche de la tranche de réseau central et un paramètre de capacité de réseau central et/un module de fonction de réseau central pris en charge par la tranche de réseau central.

3. Procédé selon la revendication 2, dans lequel avant le traitement (302) de la demande de services sur la base de la tranche de réseau central, le procédé consiste en outre à :
déterminer si la tranche de réseau central est activée ou non ;
si la tranche de réseau central n'est pas activée, activer la tranche de réseau central et procéder au traitement de la demande de services sur la base de la tranche de réseau central après que la tranche de réseau central est activée ;
si la tranche de réseau central est activée, procéder directement au traitement de la demande de services sur la base de la tranche de réseau central.

4. Procédé de traitement d'une demande de services, le procédé étant appliqué à un terminal et **caractérisé en ce qu'**il consiste à :
transmettre un message d'une demande de services à un côté réseau, le message de la demande de services portant des premières informations d'indication de services ;
recevoir les informations de configuration de tranche transmises par le côté réseau, les informations de configuration de tranche étant des informations d'une tranche de réseau central prenant en charge le message de la demande de services et sélectionnées sur la base des informations d'indication de services, la tranche de réseau central comprend un paramètre de capacité de réseau central et/ou un module de fonction de réseau central ;
dans lequel après la réception des informations de configuration de tranche par le côté réseau, le procédé consistant en outre à: effectuer une procédure de configuration de tranche sur la base des informations de configuration de tranche, et transmettre un message d'accusé de réception au terminal après que la procédure de configuration de tranche a été effectuée ;
les informations de configuration de tranche comprenant l'un ou plusieurs éléments parmi :
un identifiant de tranche de la tranche de réseau central et un paramètre de capacité de réseau central et/un module de fonction de réseau central pris en charge par la tranche de réseau central.

5. Procédé de traitement d'une demande de services, le procédé étant appliqué à un côté réseau et **caractérisé en ce qu'**il consiste à :
recevoir un message d'une demande de services transmis par un terminal, le message de la demande de services portant des premières informations d'indication de services ;
sélectionner une tranche de réseau central prenant en charge la demande de services sur la base des premières informations d'indication de services et transmettre les informations de configuration de tranche du réseau central au terminal, la tranche de réseau central comprenant un paramètre de capacité de réseau central et/ou un module de fonction de réseau central ;
traiter la demande de services en fonction de la tranche de réseau central ;
après la transmission des informations de configuration de tranche de la tranche de réseau central au terminal, le procédé consiste en outre à :
recevoir un message d'accusé de réception de tranche transmis par le terminal après qu'une procédure de configuration de tranche est effectuée sur la base des informations de configuration de tranche par le terminal.

6. Procédé selon la revendication 5, dans lequel avant le traitement de la demande de services sur la base de la tranche de réseau central, le procédé consiste en outre à :
déterminer si la tranche de réseau central est activée ou non ;
si la tranche de réseau central n'est pas activée, activer la tranche de réseau central et après que la tranche de réseau central est activée, procéder au traitement de la demande de services sur la base de la tranche de réseau central ;
si la tranche de réseau central est activée, procéder directement au traitement de la demande de services sur la base de la tranche de réseau central.

7. Dispositif de traitement d'une demande de services, **caractérisé en ce qu'**il comprend :
un premier module de sélection (601), configuré pour sélectionner, dans un ensemble de tranches de réseau central obtenu à l'avance, une première tranche de réseau central prenant en charge la demande de services, dans lequel l'ensemble de tranches de réseau central comprend une pluralité de tranches de réseau central et chaque tranche de la pluralité des tranches de réseau central comprend un paramètre de capacité de réseau central et/ou un module de fonction de réseau central ;
un premier module de transmission (602), configuré pour transmettre les informations de configuration de tranche de la première tranche de réseau central et un message d'une demande de services à un côté réseau ;
le dispositif comprenant en outre :
un premier module de réception, configuré pour recevoir des informations de l'ensemble des tranches de réseau central transmis par le côté réseau, l'ensemble de tranches de réseau central étant un ensemble de tranches de réseau central conforme aux informations d'abonnement du terminal et à un paramètre de capacité du terminal ; et
un deuxième module de réception, configuré pour recevoir un message d'accusé de réception de tranche transmis par le côté réseau après qu'une procédure de configuration de tranche est effectuée sur la base des informations de configuration de tranche par le côté réseau ;
les informations de configuration de tranche comprenant un élément parmi un ou plusieurs éléments suivants : un identifiant de tranche de la tranche de réseau central et un paramètre de capacité de réseau central et/un module de fonction de réseau central pris en charge par la tranche de réseau central.

8. Dispositif de traitement d'une demande de services, **caractérisé en ce qu'**il comprend :
un troisième module de réception (901), configuré pour recevoir un message de la demande de services et des informations de configuration de tranche d'une tranche de réseau central transmises par un terminal, la tranche de réseau central comprenant un paramètre de capacité de réseau central et/ou un module de fonction de réseau central ;
un premier module de traitement (902), configuré pour traiter la demande de services en fonction de la tranche de réseau central ;
le dispositif comprenant en outre :
un second module de réception, configuré pour transmettre les informations d'un ensemble de tranches de réseau central au terminal, l'ensemble de tranches de réseau central étant un ensemble de tranches de réseau central sélectionné conformément aux informations d'abonnement du terminal et à un paramètre de capacité du terminal ; et
un premier module de configuration, configuré pour effectuer une procédure de configuration de tranche sur la base des informations de configuration de tranche, et après que la procédure de configuration de tranche a été effectuée, transmettre un message d'accusé de réception au terminal ;
les informations de configuration de tranche comprenant un élément parmi un ou plusieurs éléments suivants : un identifiant de tranche de la tranche de réseau central et un paramètre de capacité de réseau central et/un module de fonction de réseau central pris en charge par la tranche de réseau central.

9. Dispositif de traitement d'une demande de services, **caractérisé en ce qu'**il comprend :
un troisième module de transmission configuré pour transmettre un message d'une demande de services à un côté réseau, le message de la demande de services portant des premières informations d'indication de services ;
un quatrième module de réception, configuré pour recevoir les informations de configuration de tranche transmises par le côté réseau, les informations de configuration de tranche étant des informations d'une tranche de réseau central prenant en charge le message de la demande de services et sélectionnées sur la base des informations d'indication de services, la tranche de réseau central comprenant un paramètre de capacité de réseau central et/ou un module de fonction de réseau central ;
le dispositif comprenant en outre :
un second module de configuration, configuré pour effectuer une procédure de configuration de tranche sur la base des informations de configuration de tranche et pour transmettre un message d'accusé de réception au côté réseau après que la procédure de configuration de tranche a été effectuée ;
les informations de configuration de tranche comprenant un élément parmi un ou plusieurs éléments suivants : un identifiant de tranche de la tranche de réseau central et un paramètre de capacité de réseau central et/un module de fonction de réseau central pris en charge par la tranche de réseau central.

10. Dispositif de traitement d'une demande de services, **caractérisé en ce qu'**il comprend :
un cinquième module de réception, configuré pour recevoir un message d'une demande de services par le terminal, le message de la demande de services portant des premières informations d'indication de services ;
un second module de sélection, configuré pour sélectionner une tranche de réseau central prenant en charge la demande de services sur la base des premières informations d'indication de services et pour transmettre les informations de configuration de tranche du réseau central au terminal, la tranche de réseau central comprenant un paramètre de capacité de réseau central et/ou un module de fonction de réseau central ; et
un second module de traitement, configuré pour traiter, la demande de services en fonction de la tranche de réseau central ;
le dispositif comprenant en outre :
un sixième module de réception, configuré pour recevoir un message d'accusé de réception de tranche transmis par le terminal après qu'une procédure de configuration de tranche est effectuée sur la base des informations de configuration de tranche par le terminal.
